**Europäisches Patentamt**

**European Patent Office**

**Office européen des brevets**

(19)

(11) Veröffentlichungsnummer : **0 237 018 B1**

# (12) EUROPÄISCHE PATENTSCHRIFT

(45) Veröffentlichungstag der Patentschrift :
06.02.91 Patentblatt 91/06

(51) Int. Cl.⁵ : **B29B 13/06,** B29B 9/16, F26B 17/10

(21) Anmeldenummer : 87103405.4

(22) Anmeldetag : 10.03.87

(54) Vorrichtung zum Entwässern und Trocknen von Feststoffen, insbesondere von unterwassergranulierten Kunststoffen.

(30) Priorität : 11.03.86 DE 3608026

(43) Veröffentlichungstag der Anmeldung :
16.09.87 Patentblatt 87/38

(45) Bekanntmachung des Hinweises auf die Patenterteilung :
06.02.91 Patentblatt 91/06

(84) Benannte Vertragsstaaten :
AT BE CH DE ES FR GB IT LI NL

(56) Entgegenhaltungen :
DD-A- 215 271
DD-A- 216 195
DE-A- 3 123 592
DE-A- 3 210 974
US-A- 4 441 262
US-A- 4 454 661

(73) Patentinhaber : **AUTOMATIK Apparate-Maschinenbau GmbH**
**Ostring 19**
**D-8754 Grossostheim 2 (DE)**

(72) Erfinder : **Müller, Leo**
**Am Stadtberg 8**
**D-8751 Bessenbach 2 (DE)**

(74) Vertreter : **Bardehle, Heinz, Dipl.-Ing. et al**
**Patent- und Rechtsanwälte**
**Bardehle-Pagenberg-Dost-Altenburg &**
**Partner Galileiplatz 1 Postfach 86 06 20**
**D-8000 München 86 (DE)**

EP 0 237 018 B1

## Beschreibung

Die Erfindung bezieht sich auf eine Vorrichtung zum Entwässern und Trocknen von Feststoffen, insbesondere von unterwassergranulierten Kunststoffen, in Form eines Granulat-Wasser-Gemisches mittels einer mit Entwässerungsöffnungen versehenen Röhre, an deren einem Ende das Granulat-Wasser-Gemisch zugeführt und an deren anderem Ende das getrocknete Granulat abgenommen wird und die mit einem sich axial erstreckenden etwa tangential zur Röhre gerichteten Luftzuführungsschlitz versehen ist, durch die ein in der Röhre umlaufender, mittels seiner Strömungsenergie das Granulat-Wasser-Gemisch über die Entwässerungsöffnungen wirbelnder Luftstrom erzeugt wird.

Eine derartige Vorrichtung ist aus der DD-A-215 271 bekannt. Diese Druckschrift gibt die Lehre, aufgrund des ausschließlich tangential zugeführten Luftstromes einen ständig in der Röhre umlaufenden Luftstrom zu erzeugen, der offenbar aufgrund von auftretenden Zentrifugalkräften zunächst über in der Röhrenwandung angebrachte Entwässerungsöffnungen eine Wasserableitung bewirkt und der danach durch mit Sieben abgedeckte Luftaustrittsöffnungen, die dem Luftzuführungsschlitz radial gegenüberliegen, aus der Röhre austritt. Offensichtlich kommt es dabei darauf an, das Granulat einem vielfachen Umlauf auszusetzen und die Zahl der Umläufe wahlweise zu bestimmen, denn es wird in der Beschreibung Seite 4, Absatz 3, Zeilen 3 und 4 ausdrücklich darauf hingewiesen, daß das Granulat erst nach "bestimmbarer Verweilzeit" an einem Ablasstutzen ausgetragen wird. Die Druckschrift gibt im einzelnen nicht an, wie die Verweilzeit jeweils bestimmt wird, jedoch kann mit Rücksicht auf das vorstehend gegebene Zitat nur darauf geschlossen werden, daß der Luftstrom solange kreisförmig umläuft, wie der Trocknungsvorgang dauern soll, was dann zu einer entsprechenden Zahl von Umläufen des Granulats in der Röhre führt, wobei diesem keinerlei axialer Vorschub gegeben wird. Dabei wird allerdings der Umlauf in der Röhre durch ein axial verlaufendes, nach innen ragendes Prallblech bewußt gestört, welches das Granulat jeweils nach einem 3/4-Umlauf in den Bereich des Luftzuführungsschlitzes umlenkt, wodurch das Granulat bei jedem Umlauf seine Bewegungsenergie verliert, die dann erneut durch den eintretenden Luftstrom aufgebracht werden muß. Dies führt zu einem erheblichen Luftverbrauch, der auch noch dadurch verstärkt wird, daß die eingetretene Luft jeweils nach etwa 180° Umlauf durch die Luftaustrittsöffnungen wieder abgeleitet wird.

Bei einer aus der DE-PS 21 26 069 bekannten Vorrichtung zum Entwässern von Kunststoff-Granulat wird das Granulat-Wassergemisch über einen Zuführungskanal fast tangential einem Bogensieb zugeleitet, wobei im Anschluß an das Ende des Zuführungskanals eine einen wesentlichen Bereich des Bogensiebes überdeckende Luftzuführungszone folgt, die durch die Umfangsfläche eines Ventilators gebildet wird. Infolge der Drehung des Ventilators in Stromrichtung des Granulat-Wasser-Gemisches über das Bogensieb weist die Luftströmung längs dieser Zone sowohl eine zirkulare Transportkomponente als auch im gesamten Bereich der Zone eine radiale Komponente auf, wodurch dem Granulat die Tendenz gegeben wird, der Krümmung des Bogensiebs zu folgen. Die dadurch auftretende Zentrifugalkraft bewirkt dann ein Abschleudern des Wassers und dessen Hindurchtritt durch das Bogensieb.

Der Erfindung liegt die Aufgabe zugrunde, die eingangs erläuterte Vorrichtung hinsichtlich ihres Luftverbrauchs und ihrer Trocknungseffektivität zu verbessern, und zwar unter Vermeidung von bewegten Bauteilen. Erfindungsgemäß geschieht dies dadurch, daß die Entwässerungsöffnungen in einem Bogensieb zusammengefaßt sind und der Luftzuführungsschlitz mit schräg zur Achsrichtung verlaufenden Luftleitblechen versehen ist, durch die der Luftstrom schraubenlinienförmig gerichtet wird und sowohl in Durchtrittsrichtung des Wassers durch das Bogensieb als auch entlang von diesem verläuft wobei die Röhre eine solche Länge besitzt, daß ihr zugeführtes Granulat nach mehreren Umläufen im Bereich des anderen Endes der Röhre austritt, und das Bogensieb als Bogenstück der Röhre ausgebildet ist, das sich axial im wesentlichen über die axiale Länge der Umläufe erstreckt.

Aufgrund des mehrfachen, schraubenlinienförmigen Umlaufs des dem Rohr zugeführten Granulats kommt dieses über eine relativ lange Strecke mit dem Bogensieb in Kontakt, wobei mitgeführtes Wasser nicht nur durch Zentrifugalkraft, sondern auch durch die das Bogensieb durchströmende Luft abgerissen wird. Die Luftströmung wird dabei optimal ausgenutzt, da ihr im Bereich der Umläufe kein anderer Ausweg gegeben ist. Wegen dieser relativ langen Wegstrecke ergibt sich eine besondere Intensität der Trocknung. Die Bewegung des Granulat-Wasser-Gemisches als definierte Schraubenlinie wird dabei durch die Luftleitbleche geschaffen, wobei durch das Vorhandensein eines sich axial erstreckenden Luftzuführungsschlitzes das Granulat jeweils nach einem Umlauf um 360° einen erneuten Anstoß erhält. Hierdurch wird das dem Rohr zugeführte Granulat von einem bis zum anderen Ende des Rohres in schneller schraubenlinienförmiger Bewegung gehalten, bis im Bereich des Austrittsendes des Rohres das praktisch trockene Granulat austritt, ohne daß hierzu bewegte Bauteile benötigt werden.

Zweckmäßig ordnet man den Luftzuführungsschlitz in zirkularer Luftstromrichtung vor dem Bogensieb an, so daß das Granulat-Wasser-Gemisch über das Bogensieb gefördert wird. Hierdurch erhält das Granulat-Wasser-Gemisch seinen Anstoß zu der schraubenlinienförmigen Umlaufbewegung unmittelbar vor dem Bogensieb.

Je nach Menge des zugeführten Granulat-Wasser-Gemisches und in Abhängigkeit vom Durchmesser der Röhre kann es vorteilhaft sein, in zirkularer Luftstromrichtung hinter dem Bogensieb einen weiteren Luftzuführungsschlitz anzuordnen, der dann das Granulat-Wasser-Gemisch weiterhin fördert, insbesondere über einen geschlossenen Bogenteil der Röhre.

Vorteilhaft ordnet man das Bogensieb und den bzw. die Luftzuführungsschlitze jeweils in einem Kasten an, wobei der dem bzw. den Luftzuführungsschlitzen zugeordnete Kasten an einen Luftzuführungskanal angeschlossen ist und der das Bogensieb enthaltende Kasten mit einem Luftauslaß und einem Wasserauslaß versehen ist. Hierdurch ergibt sich eine kompakte Konstruktion, bei der insbesondere die beiden Kästen in im wesentlichen symmetrischer Anordnung aneinander angeschlossen werden können.

Um einen unerwünschten, im wesentlichen axialen Lauf des Granulat-Wasser-Gemisches in der Röhre zu vermeiden, paßt man zweckmäßig in die Röhre kreissegmentartige, in der axialen Projektion sich überlappende Leitflächen derart ein, daß ihre Oberfläche dem schraubenlinig verlaufenden Luftstrom im wesentlichen folgt. Im wesentlichen sich axial bewegende Granulatkörner werden dann durch die Leitflächen aufgehalten und in den schraubenlinienförmigen Luftstrom eingeleitet.

Ein Ausführungsbeispiel der Erfindung ist in den Figuren dargestellt. Es zeigen :

Fig. 1 die Röhre in prinzipieller Darstellung mit dem schraubenlinienförmig bewegten Granulat-Wasser-Gemisch,

Fig. 2 die Röhre gemäß Fig. 1 von der Stirnseite her gesehen,

Fig. 3 einen Schnitt gemäß der Linie 3-3 aus Fig. 2 mit der Darstellung der Luftleitbleche,

Fig. 4a, b, c verschiedene Abwandlungen der Gestaltung der Luftleitbleche,

Fig. 5 die Vorrichtung mit in einem Gehäuse untergebrachter Röhre,

Fig. 6 die Anordnung gemäß Fig. 5 von der Stirnseite her gesehen,

Fig. 7 die Anordnung gemäß Fig. 5 von der Seite gesehen in schematischer Darstellung.

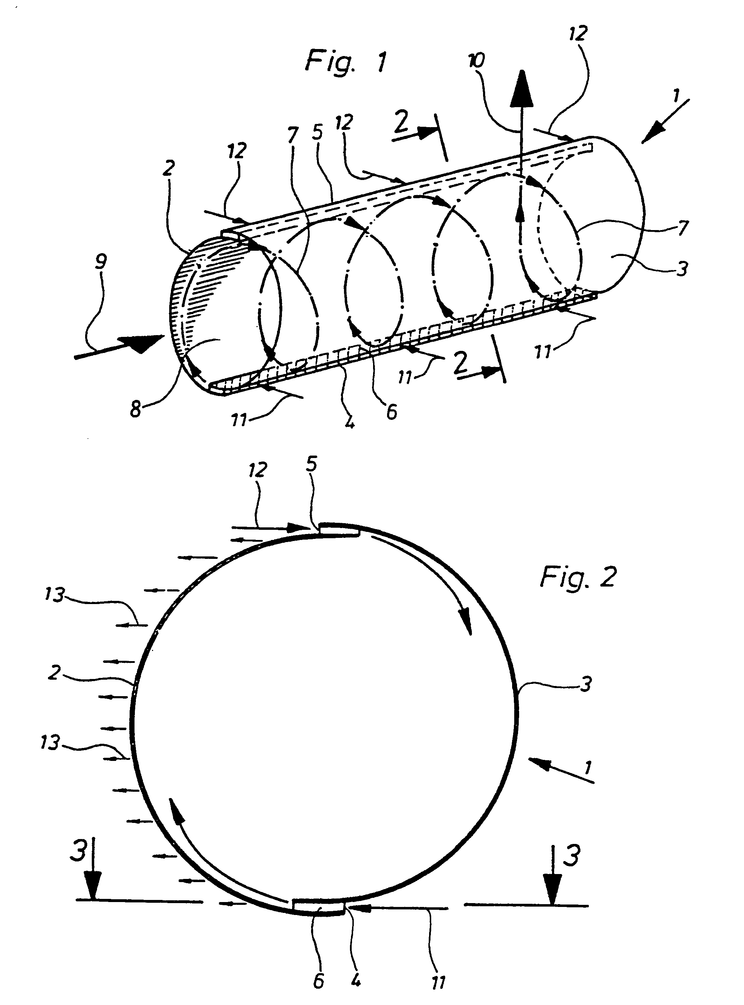

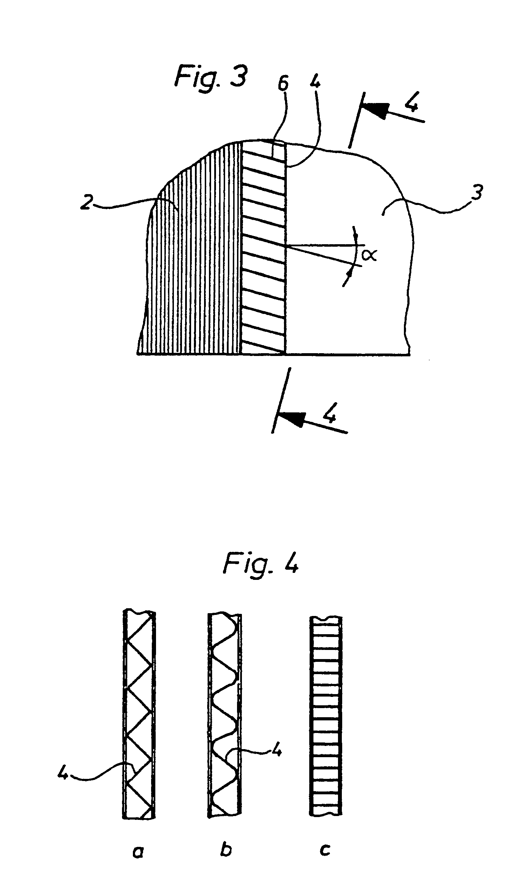

Fig 1 zeigt die Vorrichtung in prinzipieller Darstellung in perspektivischer Sicht. Dargestellt ist das Rohr 1, das axial etwa halbiert ist und hierdurch in das Bogensieb 2 und den geschlossenen Bogenteil 3 aufgeteilt ist. Sowohl das Bogensieb 2 als auch das geschlossene Bogenteil 3 erstrecken sich in axialer Richtung jeweils über die gesamte Länge des Rohres 1. Längs der axialen Trennstellen zwischen dem Bogensieb 2 und dem geschlossenen Bogenteil 3 erstrecken sich die Luftzuführungsschlitze 4 und 5, wobei also der Luftzuführungsschlitz 4 in zirkularer Luftstromrichtung (siehe unten) vor dem Bogensieb 2 angeordnet ist. Im Luftzuführungsschlitz 4 sind die Luftleitbleche 6 angeordnet (siehe auch Fig. 2 bis 4), die aufgrund einer Schrägrichtung (siehe Fig. 3) einem durch den Luftzuführungsschlitz 4 hindurchtretenden Luftstrom eine solche Richtung geben, daß in der Röhre 1 der schraubenlinienförmig verlaufende Luftstrom 7 erzeugt wird (dargestellt durch die strichpunktierte Linie innerhalb der Röhre 1).

Die im wesentlichen tangential zur Röhre 1 verlaufende Richtung des Luftzuführungsschlitzes 4 sorgt dafür, daß ein dem Luftzuführungsschlitz 4 zugeführter Luftstrom innerhalb der Röhre 1 eine zirkulare Luftströmung solcher Geschwindigkeit erzeugt, daß auf der Stirnseite 8 der Röhre 1 zugeführtes Granulat-Wasser-Gemisch (dargestellt durch den Pfeil) über die Innenwand der Röhre 1 zirkular gewirbelt wird, wobei das Granulat-Wasser-Gemisch unmittelbar nach dem Luftzuführungsschlitz 4 über das Bogensieb 2 geführt wird. Infolge auftretender Zentrifugalkräfte wird im Bereich des Bogensiebes 2 dem Granulat anhaftendes Wasser in bekannter Weise, wie bei einem Bogensieb üblich, abgeschleudert. Dabei tritt radial nach außen durch das Bogensieb auch Luft aus, was im Sinne einer Mitführung von Wasser auch erwünscht ist. Aufgrund der Luftleitbleche 6 erhält der den Luftzuführungsschlitz 4 durchsetzende Luftstrom außer der Tangentialrichtung eine axiale Komponente, so daß im Inneren der Röhre 1 der dargestellte schraubenlinienförmige Verlauf 7 des Luftstromes und damit des von ihm mitgerissenen Granulat-Wasser-Gemisches ergibt. Dieser schraubenlinienförmig verlaufende Luftstrom 7 erhält jeweils nach Durchlauf von 360° einen erneuten Anstoß durch die aus dem Luftzuführungsschlitz 4 austretende Luft, so daß die schraubenlinienförmige Bewegung des Granulat-Wasser-Stromes 7 bis zum Ende der Röhre aufrechterhalten wird. Am Ende der Röhre 1 ist radial nach oben ein in Fig. 1 nicht dargestellter Auslaß vorgesehen, durch den das nunmehr weitgehend getrocknete Granulat, dargestellt durch den Pfeil 10, nach oben austritt. Dies ist aus Gründen der Gewinnung von Höhe besonders erwünscht.

Gemäß Fig. 1 ist in der Röhre 1 außer dem Luftzuführungsschlitz 4 noch der Luftzuführungsschlitz 5 vorgesehen, und zwar unmittelbar hinter dem Bogensieb 2. Durch den Luftzuführungsschlitz 5 wird ebenfalls dem Innenraum der Röhre 1 ein Luftstrom zugeführt, der dem am Ende des Bogensiebes 2 angekommenen Granulat ebenfalls einen Anstoß in tangentialer Richtung gibt. Hierdurch wird erreicht, daß das in der Röhre 1 kreisende Granulat-Wasser-Gemisch in hoher Bewegungsgeschwindigkeit gehalten wird.

Es sei darauf hingewiesen, daß der Luftzuführungsschlitz 5 nur dann erforderlich ist, wenn insbesondere im Falle eines großen Durchmessers der Röhre 1 eine besonders hohe Umlaufgeschwindigkeit des Granulat-Wasser-Gemisches in der Röhre 1 erforderlich ist. Dies hängt von dem jeweils gewünschten Grad der Trocknung ab. Dabei kann es ausreichen, wenn nur der Luftzuführungsschlitz 4 mit den Luftleitblechen 6 versehen wird, sofern hierdurch dem Luftstrom 7 in der Röhre 1 eine ausreichend starke axiale Komponente gegeben wird. Wenn dies nicht ausreicht, so können auch im Luftzuführungsschlitz 5 Luftleitbleche vorgesehen werden.

Figur 2 zeigt die Anordnung nach Fig. 1 von der Stirnseite her gesehen. Wie ersichtlich, schließen in der Wand der Röhre 1 das Bogensieb 2 und das geschlossene Bogenteil 3 aneinander an, und zwar jeweils über den Luftzuführungsschlitz 4 bzw. 5. Der den Luftzuführungsschlitzen 4 und 5 zugeführte Luftstrom ist durch die Pfeile 11 und 12 bezeichnet. Durch die Pfeile 13 wird das von dem Granulat abgeschleuderte Wasser und die durch das Bogensieb 2 hindurchtretende Luft angedeutet.

In der Fig. 3 ist die Anordnung der Luftleitbleche 6 in dem Luftzuführungsschlitz 4 im Schnitt gemäß der Linie 3-3 aus Fig. 2 dargestellt. Die Luftleitbleche 6 sind hier zur Längserstreckung des Luftzuführungsschlitzes 4 unter einem Winkel α geneigt, der etwa 15 bis 30° betragen kann. Durch diese Schräglage der Luftleitbleche 6 wird die oben erwähnte axiale Komponente des Luftstromes 7 erzeugt.

In den Fig. 4a, b und c sind verschiedene Ausführungsformen hinsichtlich der Gestaltung der Luftleitbleche 6 dargestellt, wobei diese Figuren jeweils eine Anordnung im Schnitt längs der Linie 4-4 aus Fig. 3 zeigen. Die abgewinkelte Lage des Schnittes 4-4 wurde darum gewählt, um aus Gründen einfacher Darstellung die Luftleitbleche 4 von ihrer Stirnseite her zu zeigen, wobei also die Schräglage des Schnittes 4-4 dem Winkel α entspricht. Gemäß Fig. 4a sind die Luftleitbleche 4 in Zick-Zack gelegt, gemäß Fig. 4b als Wellenlinie und gemäß Fig. 4c als Rechteck-Waben.

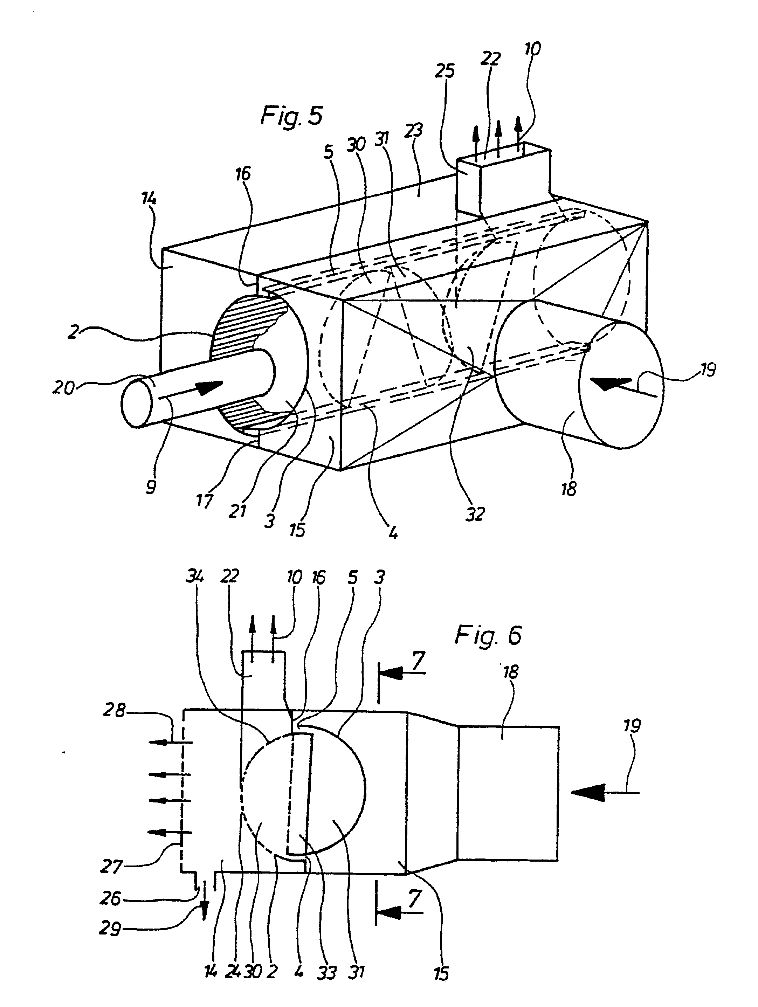

In Fig. 5 ist die Anordnung gemäß Fig. 1 zusammen mit einem Gehäuse dargestellt. Das aus Bogensieb 2, geschlossenem Bogenteil 3 und den beiden Luftzuführungsschlitzen 4 und 5 bestehende Rohr ist hier in einem aus den beiden Kästen 14 und 15 gebildeten Gehäuse untergebracht, wobei der Kasten 14 das Bogensieb 2 und der Kasten 15 das geschlossene Bogenteil 3 umfaßt. Der Kasten 15 reicht dabei mit seiner auf das Bogensieb 2 zuweisenden Wand 16 bis hinter die Eintrittsöffnung des Luftzuführungsschlitzes 5, die entsprechende Wand 17 endet an der Eintrittsseite des Luftzuführungsschlitzes 4. Der Kasten 15 umfaßt damit einen Raum dessen Wände 16 und 17 aufgrund dieser Lage einen Luftzutritt aus dem Kasten 15 zu den Luftzuführungsschlitzen 4 und 5 erlauben. Der Kasten 15 ist zu diesem Zweck mit dem Luftzuführungskanal 18 versehen. Der ihm zuführte Luftstrom ist durch den Pfeil 19 bezeichnet.

Die über den Luftzuführungskanal 18 zugeführte Luft gelangt somit über den Innenraum des Kastens 15 in die Luftzuführungsschlitze 4 und 5, womit dann die durch die Luftzuführungsschlitze 4 und 5 geleitete Luft die im Zusammenhang mit der Fig. 1 beschriebene Wirkung entfalten kann.

Der Kasten 14 bildet einen das Bogensieb 2 einfassenden Innenraum, in den das durch das Bogensieb 2 abgeschleuderte Wasser und die hindurchtretende Luft eintritt (Bezugszeichen 13 in Fig. 2). Diese Luft wird über die in Fig. 5 nicht sichtbare Rückwand des Kastens 14 ins Freie geleitet, was anhand der Fig. 6 näher erläutert wird. Das sich am Boden des Kastens 14 sammelnde Wasser wird aufgrund der Schwerkraft über einen in Fig. 5 nicht sichtbaren Wasserauslaß am Boden des Kastens 14 abgeleitet, was im Zusammenhang mit der Fig. 6 ebenfalls näher erläutert wird.

Das Granulat-Wasser-Gemisch, symbolisch dargestellt durch den Pfeil 9, wird der Anordnung über das Einlaufrohr 20 zugeführt, das in der Stirnwand 21 endet, die Bestandteil sowohl des Kastens 14 als auch des Kastens 15 ist. Das weitgehend getrocknete Granulat wird über den Austrittsschacht 22 von der Anordnung weggeführt. Der Austrittsschacht 22 durchsetzt den Deckel 23 des Kastens 14 und ist im Inneren des Kastens 14 in Richtung auf die Röhre verlängert, und zwar derart, daß diese Verlängerung an eine seitliche Öffnung in der Röhre 1 anschließt, die von dem Bogensieb 2 freigehalten ist. Auf diese Weise erhält die Röhre in ihrer durch das Bogensieb 2 bestimmten Wandung einen Durchlaß, der von der Wand 16 bis zum Berührungspunkt 24 einer senkrechten Tangente am Bogensieb 2 reicht (siehe Fig. 6), wobei der Austrittsschacht 22 mit seiner stirnseitig angeordneten Wand 25 durch den Innenraum des Kastens 14 bis an die Wandung der Röhre reicht, d.h. hier bis an das an dieser Stelle in axialer Richtung endende Bogensieb 2. Es bleibt damit also der in Fig. 6 strichpunktiert gezeichnete Öffnungsbereich 34 der Röhre frei, so daß in diesem Bereich hochgeschleudertes Granulat, das hier bereits weitgehend wasserfrei ist, durch den Austrittsschacht 22 hochsteigen und über diesen weitergeleitet werden kann.

An den Austrittsschacht 22 kann sich dann ein hier nicht dargestellter Krümmer anschließen, der verhindert, daß etwa im Austrittsschacht 22 hochgeschleudertes Granulat in die Röhre 1 zurückfallen kann.

Es ergibt sich damit eine Wirkungsweise der Anordnung gemäß Fig. 5, gemäß der das Granulat-Wasser-Gemisch 9 durch das Einlaufrohr 20 in den Innenraum des Rohres, gebildet durch das Bogensieb 2 und den geschlossenen Bogenteil 3, gelangt, sodann im Sinne der Darstellung gemäß Fig. 1 schraubenlinienförmig herumgewirbelt und voneinander getrennt abgegeben wird, und zwar das Wasser mit einem Teil der Luft über einen in Fig. 5 nicht dargestellten Wasserauslaß und einen Luftauslaß (siehe Fig. 6) und das Granulat 10 mit Luft über den Austrittsschacht 22.

Fig. 6 zeigt die Anordnung gemäß Fig. 5 in prinzipieller Darstellung von der Stirnseite her gesehen. Wie ersichtlich, enthält der Kasten 14 an seiner Unterseite den Wasserauslaß 26 und im Bereich seiner Rückwand einen sogenannten Tropfenabscheider 27, der im wesentlichen in bekannter Weise aus einer durchbrochenen Wand besteht. Die austretende Luft ist hier mit den Pfeilen 28 und das austretende Wasser mit dem Pfeil 29 bezeichnet.

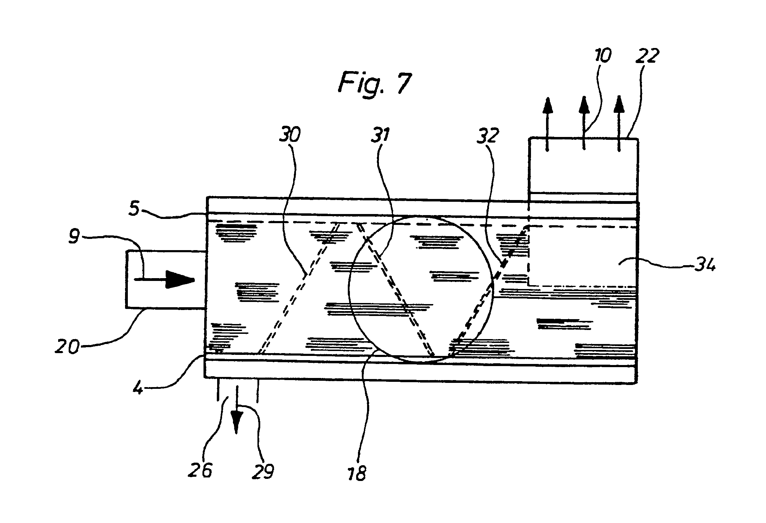

In der Fig. 5 sind noch die kreissegmentartigen Leitflächen 30, 31 und 32 eingezeichnet, die nach Art von schrägen Schnitten in dem Rohr, gebildet aus Bogensieb 2 und geschlossenem Bogenteil 3 eingesetzt sind. Ihre Schräglage ist auch aus Fig. 7, auf die weiter unten näher eingegangen wird, ebenfalls ersichtlich. Gemäß Fig. 6, in der die Leitflächen 30 und 31 dargestellt sind, überlappen sich diese in der Projektion im Überlappungsbereich 33. Die Leitflächen 30, 31 und 32 sind hinsichtlich ihrer Schräglage an die Steigung der schraubenlinienförmigen Strömung 7 (siehe Fig. 1) angepaßt, so daß sie diese Strömung nicht behindern. Aufgrund ihrer Überlappung im Überlappungsbereich 33 verhindern sie jedoch einen direkten axialen Durchtritt von Granulat, das bei Auftreffen auf eine Leitfläche 30, 31 bzw. 32 von dieser abgewiesen und dem zirkulierenden Luftstrom zugeführt wird.

Figur 7 zeigt die Anordnung gemäß Fig. 6 in schematischer Darstellung nach Art eines Schnittes längs der Linie 7-7 aus Fig. 6. Aus Fig. 7 ist die Schräglage der Leitflächen 30, 31 und 32 deutlich ersichtlich. Fig. 7 zeigt auch den Öffnungsbereich 34 unterhalb des Austrittsschachtes 22, über den dieser an die Röhre im Bereich des Bogensiebs angeschlossen ist. In Fig. 7 ist das Bogensieb durch die axiale Strichelung schematisch angedeutet, woraus sich ergibt, daß das Bogensieb eine dem Öffnungsbereich 34 entsprechende Aussparung aufweist.

## Ansprüche

1. Vorrichtung zum Entwässern und Trocknen von Feststoffen, insbesondere von unterwassergranulierten Kunststoffen, in Form eines Granulat-Wasser-Gemisches mittels einer mit Entwässerungsöffnungen versehenen Röhre (1), an deren einem Ende das Granulat-Wasser-Gemisch (9) zugeführt und an deren anderem Ende das getrocknete Granulat abgenommen wird und die mit einem sich axial erstreckenden, etwa tangential zur Röhre (1) gerichteten Luftzuführungsschlitz (4) versehen ist, durch die ein in der Röhre (1) umlaufender, mittels seiner Strömungsenergie das Granulat-Wasser-Gemisch über die Entwässerungsöffnungen wirbelnder Luftstrom (7) erzeugt wird, **dadurch gekennzeichnet**, daß die Entwässerungsöffnungen in einem Bogensieb (2) zusammengefaßt sind und der Luftzuführungsschlitz (4) mit schräg zur Achsrichtung verlaufenden Luftleitblechen (6) versehen ist, durch die der Luftstrom (7) schraubenlinienförmig gerichtet wird und sowohl in Durchtrittsrichtung des Wassers durch das Bogensieb (2) als auch entlang von diesem verläuft, wobei die Röhre (1) eine solche Länge besitzt, daß ihr zugeführtes Granulat nach mehreren Umläufen im Bereich des anderen Endes der Röhre (1) austritt, und das Bogensieb (2) als Bogenstück der Röhre (1) ausgebildet ist, das sich axial im wesentlichen über die axiale Länge der Umläufe erstreckt.

2. Vorrichtung nach Anspruch 1, dadurch gekennzeichnet, daß in Luftstromrichtung vor dem Bogensieb (2) der Luftzuführungsschlitz (4) zur Förderung des Granulat-Wasser-Gemisches (9) im wesentlichen über das Bogensieb (2) angeordnet ist.

3. Vorrichtung nach Anspruch 2, dadurch gekennzeichnet, daß in Luftstromrichtung hinter dem Bogensieb (2) ein weiterer Luftzuführungsschlitz (5) zur Förderung des Granulat-Wasser-Gemisches (9) über einen geschlossenen Bogenteil (3) der Röhre (1) angeordnet ist.

4. Vorrichtung nach Anspruch 2 oder 3, dadurch gekennzeichnet, daß das Bogensieb (2) und der bzw. die Luftzuführungsschlitze (4, 5) jeweils in einem Kasten (14, 15) angeordnet sind, wobei der dem bzw. den Luftzuführungsschlitzen (4, 5) zugeordnete Kasten (15) an einen Luftzuführungskanal (18) angeschlossen ist und der das Bogensieb (2) enthaltende Kasten (14) mit einem Luftauslaß (27) und einem Wasserauslaß (26) versehen ist.

5. Vorrichtung nach einem der Ansprüche 1 bis 4, dadurch gekennzeichnet, daß in die Röhre (1) kreissegmentartige, in der axialen Projektion sich überlappende Leitflächen (30, 31, 32) derart eingepaßt sind, daß ihre Oberfläche dem schraubenlinig verlaufenden Luftstrom (7) im wesentlichen folgt.

## Claims

1. Apparatus for dewatering and drying solid materials, especially plastics pelletised below water level, in the form of a pellet/water mixture by means of a tube (1) provided with dewatering openings, the pellet/water mixture (9) being fed to one end of said tube and the dried pellets being discharged from the other end, and provided with an axially extending air supply slot (4) oriented approximately tangentially in relation to the tube (1), by means of which an air stream (7) circulating in the tube (1) is produced, the flow energy thereof swirling the pellet/water mixture around over the dewatering openings, characterised in that the dewatering openings are united in a curved screen (2) and the air supply slot (4) is provided with air baffles (6) extending transversely in relation to the axial direction, by means of which the air stream (7) is helically directed and runs both in the direction of the passage of the water through the curved screen (2) and along said screen, the tube (1) having a length such that the pellets fed thereto are discharged in the region of the other end of the tube (1) after several revolutions, and the curved screen (2) being designed as a bend in the tube (1) extending axially over essentially the entire axial length of the revolutions.

2. Apparatus according to claim 1, characterised in that the air supply slot (4) is disposed in the direction of the air flow in front of the curved screen (2) to feed the pellet/water mixture (9) essentially over the curved screen (2).

3. Apparatus according to claim 2, characterised in that a further air supply slot (5) is disposed in the direction of the air flow behind the curved screen (2) to feed the pellet/water mixture (9) over a closed curved section (3) of the tube (1).

4. Apparatus according to claim 2 or claim 3, characterised in that the curved screen (2) and the air supply slot or slots (4, 5) are each disposed in a box (14, 15), the box (15) associated with the air supply slot or slots (4, 5) being connected to an air supply duct (18) and the box (14) containing the curved screen (2) being provided with an air outlet (27) and a water outlet (26).

5. Apparatus according to one of claims 1 to 4, characterised in that segmental baffles (30, 31, 32) overlapping one another in the axial projection are fitted into the tube (1) in such a way that their surfaces essentially follow the helical air stream (7).

## Revendications

1. Dispositif pour la déshydratation et le séchage de matières solides, notamment des matières synthétiques granulées sous l'eau sous la forme d'un mélange de granulés et d'eau, à l'aide d'un tube (1) muni d'ouvertures de déshydratation, à une extrémité duquel est apporté le mélange de granulés et d'eau (9) et à l'autre extrémité duquel sont recueillis les granulés séchés, et qui est muni d'une fente d'apport d'air (4) s'étendant axialement et orientée approximativement tangentiellement au tube (1), par laquelle est produit un flux d'air (7) qui circule en révolutions dans le tube (1) et qui, par son énergie d'écoulement, fait tourbillonner le mélange de granulés et d'eau au-dessus des ouvertures de déshydratation, **caractérisé** en ce que les ouvertures de déshydratation sont réunies en un tamis cintré (2) et la fente d'apport d'air (4) est munie de déflecteurs d'air (6) s'étendant en oblique par rapport au sens axial, par lesquels le flux d'air (7) est dirigé en hélice et s'étend à la fois dans la direction de traversée du tamis cintré (2) par l'eau et le long de ce tamis cintré, le tube (1) possédant une longueur telle que les granulés qui lui sont apportés, après plusieurs révolutions, sortent dans la région de l'autre extrémité du tube (1), et le tamis cintré (2) est réalisé sous la forme d'une partie cintrée du tube (1), qui s'étend axialement sensiblement sur la longueur axiale des révolutions.

2. Dispositif selon la revendication 1, caractérisé en ce que la fente d'apport d'air (4) est disposée avant le tamis cintré (2) dans le sens d'écoulement de l'air, afin de transporter le mélange de granulés et d'eau (9) sensiblement au-dessus du tamis cintré (2).

3. Dispositif selon la revendication 2, caractérisé en ce qu'une autre fente d'apport d'air (5) est disposée après le tamis cintré (2) dans le sens d'écoulement de l'air, afin de transporter le mélange de granulés et d'eau (9) au-dessus d'une partie cintrée fermée (3) du tube (1).

4. Dispositif selon la revendication 2 ou 3, caractérisé en ce que le tamis cintré (2) et la ou les fentes d'apport d'air (4, 5) sont disposés dans des caissons respectifs (14, 15), le caisson (15) associé à la ou les fentes d'apport d'air (4, 5) étant raccordé à un canal d'apport d'air (18) et le caisson (14) contenant le tamis cintré (2) étant muni d'une évacuation d'air (27) et d'une évacuation d'eau (26).

5. Dispositif selon l'une des revendications 1 à 4, caractérisé en ce que des surfaces déflectrices (30, 31, 32) du genre segments de cercle, se chevauchant en projection axiale, sont encastrées dans le tube (2) de telle sorte que leur face supérieure suit sensiblement le flux d'air (7) qui se développe en hélice.

Fig. 1

Fig. 2

## Fig. 3

## Fig. 4

a    b    c

Fig. 5

Fig. 6

Fig. 7